# EUROPEAN PATENT APPLICATION

(11) **EP 4 807 779 A1**
(43) Date of publication of application: **16.09.2026**
(21) Application number: 26164008.0
(22) Date of filing: 11.03.2026
(51) Int. Cl.: H01J 5/18, H01J 37/20, H01J 35/18

(54) **FREESTANDING MEMBRANE**

(30) Priority: 12.03.2025 IT 202500005052
(71) Applicant: Fondazione Bruno Kessler (FBK), 38122 Trento (TN) (IT)
(72) Inventor: NAWAZ, Ali, Trento (TN) (IT); BAGOLINI, Alvise, Trento (TN) (IT)
(74) Representative: Metroconsult Srl

(57) **Abstract**

The present invention regards a membrane element for a freestanding membrane. The membrane element comprises: a rib support structure; a thin film having a rib portion covering the rib support structure, a transition portion, and an unsupported portion; and a thin film transition structure extending from a lower end of the rib support structure. The thin film transition structure is characterized by a rounded cross-sectional profile.

## Description

### Background of the Invention

In scientific measurements, the ability to maintain a clean environment is essential. Different measurement techniques rely on equipment like transmission electron microscopes, scanning electron microscopes, energy dispersive spectrometry systems, and x-ray fluorescence analyzers to perform extremely sensitive measurements. These instruments are designed to provide high-resolution images and precise compositional analysis, but their accuracy is heavily dependent on the ability to maintain a vacuum environment. Any contamination or exposure to external factors can compromise the integrity of the measurement, leading to inaccurate results.

In order to separate the internal components from the external environment, these products rely on freestanding membranes to allow the passage of specific types of electromagnetic radiation without compromising the vacuum inside the device.

Freestanding membranes are generally created from silicon wafers by an etching and deposition process. The etching process creates patterns according to a particular design. The deposition process then creates thin film membranes capable of providing the requisite isolation and protection.

These membranes serve as a critical interface between the internal environment of the instrument and the external world, allowing for the transmission of electrons, x-rays, or other forms of radiation while maintaining a seal. However, traditional membranes often have limitations in terms of their material properties, thickness, and durability, which can impact the accuracy and reliability of the measurement.

Freestanding silicon nitride membranes used as X-ray entrance windows are most typically supported by silicon rib grids and must withstand a significant pressure differential between internal and external environments. However, their design and fabrication face significant challenges. For example, traditional membranes may be prone to degradation or damage from exposure to high-energy radiation, which can compromise their ability to maintain a seal. Additionally, the thickness and material properties of traditional membranes can affect the transmission of radiation, leading to reduced signal intensity or altered spectral characteristics. Furthermore, stress concentrations at the edges where thin films connect to supporting ribs cause failures under pressure differentials. In order to circumvent this issue, relatively thick films (100-200 nm) are typically fabricated, which disrupts the transmissions of low-energy X-rays. Low energy X-ray transmission is particularly required in X-ray fluorescence analysis and electron microscopy applications, especially when analyzing lightweight elements, such as carbon and boron. Furthermore, the commercial membranes are typically small (≤5.5 mm diameter) to ensure durability, limiting their use in high-precision applications. In addition, conventional etching processes lead to non-uniform release of the membranes resulting in a low yield, making it difficult to balance full membrane release with sufficient silicon overhang for robustness. Similarly, the fabrication process for traditional membranes can be complex and time-consuming, which can increase the cost and reduce the availability of these critical components.

In response to these challenges, there is a need for a freestanding membrane that can provide improved performance, durability, and reliability in scientific measurement applications. The present invention addresses this need by providing a novel freestanding membrane element design.

### Summary of the Invention

According to a first aspect, the present invention relates to a membrane element for a freestanding membrane.

Preferably, the membrane element comprises a rib support structure.

Preferably, the membrane element comprises a thin film.

Preferably, the thin film has: a rib portion, wherein the thin film covers said rib support structure; a transition portion, and an unsupported portion.

Preferably, the membrane element comprises a thin film transition structure extending from a lower end of said rib support structure.

Preferably, the thin film transition structure is characterized by a rounded cross-sectional profile.

According to a second aspect, the present invention also relates to a freestanding membrane which comprises a plurality of membrane elements according to the disclosure.

According to a third aspect, the present invention also relates to a method for producing the freestanding membrane structure disclosed.

Preferably, the method comprises a first etching process on a first surface of a silicon wafer.

Preferably, the first etching process forms: (i) a plurality of said rib support structures (320), and (ii) a second surface.

Preferably, the method comprises a second etching process on said second surface.

Preferably, the second etching process forms a thin film transition structure extending from said rib support structure.

Preferably, the method comprises a thin film deposition process.

Preferably, the thin film deposition process deposits the thin film covering a resulting surface of the first and second etching processes.

Preferably, the method comprises a third etching process on a third surface to release the thin film from the silicon wafer creating said unsupported portion.

In one or more of the above aspects, the invention may comprise one or more of the following preferred features.

Preferably, the rounded cross-sectional profile is defined by a recess.

Preferably, said recess forms a smooth transition between the rib portion and the unsupported partition of the thin film.

Preferably, the rounded cross-sectional profile is substantially elliptical.

Preferably, the thin film transition structure has a vertically etched depth substantially between 7 and 15 micrometers.

Preferably, the thin film transition structure has a horizontally or laterally etched width between 2 and 6 micrometers.

Preferably, the membrane element further comprises a thin film thickness substantially between 50 - 200 nanometers.

Preferably, the rib support structure width is substantially between 15 and 20 micrometers.

Preferably, the thin film is composed of silicon nitride.

Preferably, the rib support structure and the thin film transition structure are comprised of a silicon-based substrate.

Preferably, the freestanding membrane comprises a plurality of rib support structures which form a substantially hexagonal arrangement of membrane elements.

Preferably, the hexagonal arrangement has a diameter substantially between 150 and 200 micrometers.

### Brief Description of the Figures

This description will refer to the annexed drawings, which are provided as explanatory and non-limiting examples of systems and methods according to the invention, wherein:
- Figure 1 depicts a top view of an exemplary freestanding membrane according to the invention etched from a silicon wafer;
- Figure 2 shows a simplified and condensed traditional design of a generic freestanding membrane in line with designs known in the art;
- Figure 3 shows a schematic of a single interface between a support structure and a thin film in accordance with the disclosed invention;
- Figure 4 shows a schematic of a freestanding membrane in accordance with the disclosed invention.

### Detailed Description

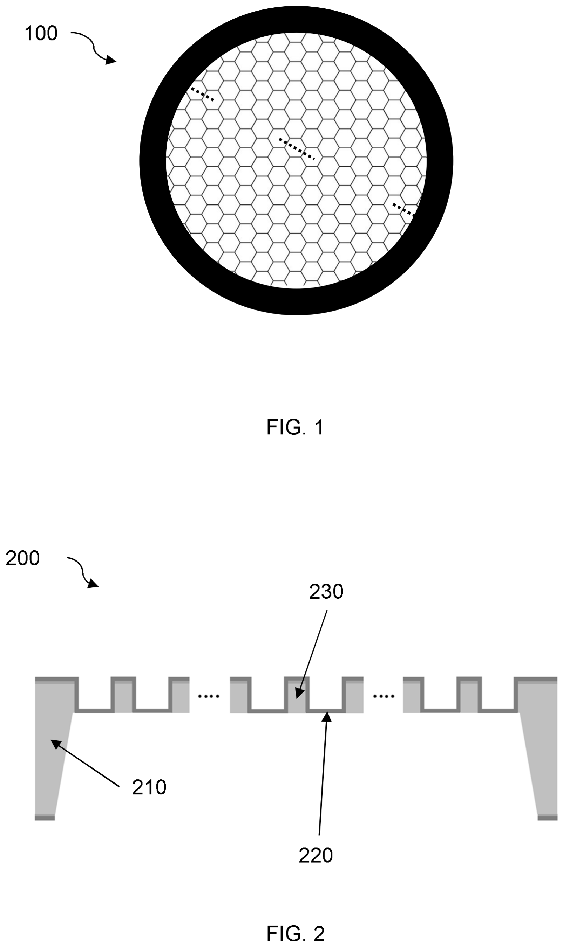

The silicon wafer 100 as seen in figure 1 provides the raw material with which to produce a freestanding membrane. The silicon wafer 100 is typically double-side polished and has a crystallographic orientation of <100>, providing the overall superstructure a support upon which a processing is performed thereby obtaining a finished freestanding membrane.

Figure 2 shows a simplified structure of a generic freestanding membrane 200 obtained from a silicon wafer 100. The generic freestanding membrane 200 is created from a silicon wafer 100 etching and deposition process which creates a specific etching pattern depending upon a desired final structure. The etching process may comprise a multi-stage etching process or involve etching techniques such as wet etching, dry etching, reactive-ion etching, or substantially similar methods.

The generic freestanding membrane 200 consists of 3 main structural elements; the window support structure 210, the generic rib support structure 230, and the generic thin film 220.

The window support structure 210 provides a mounting structure and support for the exposed or unsupported partitions of the generic thin film 220.

The generic rib support structure 230 provides a support matrix for the generic thin film 220 created from the silicon wafer. The generic rib support structure 230 is generally configured in the form of a plurality of hexagons due to their tiling efficiency. The hexagonal form tiles the surface of the silicon wafer 100, providing support for the generic thin film 220 while minimizing the total perimeter/surface area covered by the generic rib support structure 230.

The generic thin film 220 is comprised of a thin film layer deposited over a silicon wafer 100 after an etching process. The generic thin film 220 is then formed from a bulk silicon back-side etch which releases the generic thin film 220 from the silicon wafer 100 creating a plurality of exposed partitions.

In this configuration, when differential pressure is applied across the generic freestanding membrane 200, stress concentrates at the lower edges where the exposed partition interfaces sharply with the rib support structure (230). Consequently, freestanding membranes (200) of this design fail to withstand elevated differential pressures. Pressure tests indicate generic freestanding membrane (200) breakage occurs at differential pressures between 200-300 mbar.

Another critical issue is the abrupt transition between the exposed partition and the generic rib support structure 230. During the bulk silicon etching process, an over-etch time is generally required to ensure a complete release of the exposed partitions. Due to the required over-etch time, the rib support structure 230 is exposed to the etchant. Since the rib support structure 230 is composed of silicon, it continues to etch. This over-etching results in a reduction in the rib support structure's thickness, significantly compromising its structural integrity.

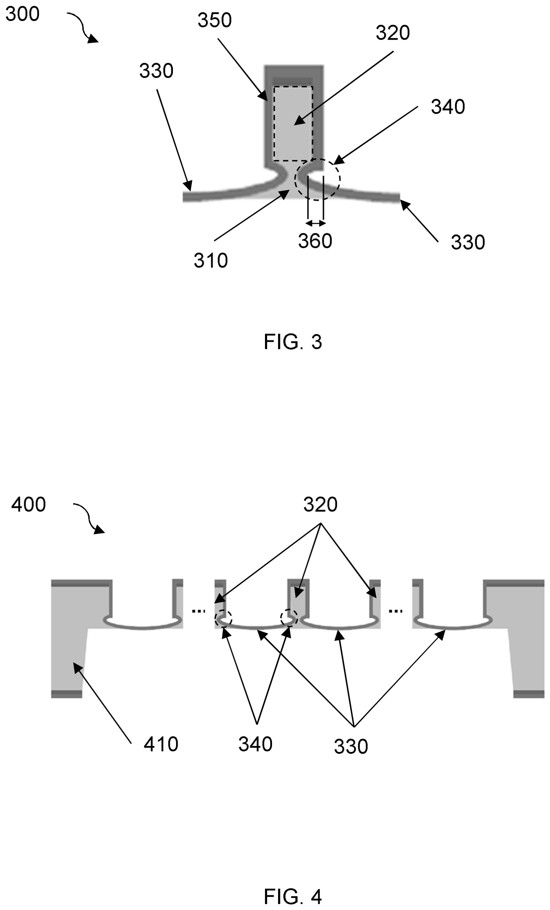

The membrane element 300 shown in figure 3 greatly improves the physical characteristics and production of a freestanding membrane 400 shown in profile in figure 4.

The membrane element 300 comprises a rib support structure 320, a thin film 330, and a thin film transition structure 310. The thin film 330 comprises or consists of an unsupported portion, a transition portion, and a rib portion. The rib portion and transition portion of the thin film 330 cover or are deposited onto their respective structures: the rib portion of the thin film 330 covering the rib support structure 320, and the transition portion of the thin film 330 covering the thin film transition structure 310. The thin film transition structure 310 extends from a lower end of the rib support structure 320 and is characterized by a substantially round or rounded cross-sectional profile 340.

The thin film transition structure creates a smooth transition for the thin film 330 from the unsupported portion to the supported portions: the transition portion and the rib portion.

In a particular embodiment of the invention, the rounded cross-sectional profile 340 defined by the thin film transition structure 310 comprises a recess, undercut, notch, or similar. Different rounded profiles may be utilized for the recess, undercut, notch, or similar. The recess at the rounded cross-sectional profile 340 is preferably substantially elliptical and forms an isotropic well. The isotropic well, so called due to the etching process used to create it, has a vertical depth of about 12 micrometers. The vertical depth may optionally vary substantially between 7 and 15 micrometers. The isotropic well also comprises a horizontal etch depth 360 of between 2 and 6 micrometers. Preferably, the horizontal etch depth 360 is substantially equal to 4 micrometers.

The rounded cross-sectional profile 340 provides a substantial improvement to the physical characteristics of the membrane element 300. The rounded cross-sectional profile 340 limits the concentration of stress on the thin film 330. This structural change enables a freestanding membrane 400 comprising membrane elements 300 to withstand a larger pressure differential with respect to a generic freestanding membrane 200. Pressure tests performed in this configuration showed that a freestanding membrane 400 made of membrane elements 300 is able to withstand differential pressures of more than 900 millibar.

The rounded cross-sectional profile 340 also provides a substantial improvement to the processing of freestanding membranes 300. Due to the increased stress resilience, the thin film 330 demonstrates the ability to withstand stresses or non-uniformities which occur during the etching and production process.

The thin film transition structure 310 also provides a margin of safety for the back-side release etching process in the freestanding membrane production. The margin of safety allows for a full membrane release while maintaining sufficient silicon support at the bottom of the thin film to provide the requisite stress resilience. This silicon support is a so-called silicon overhang which is formed substantially by said thin film transition structure 310. The silicon overhang provides additional silicon material which is able to largely compensate for backside etching non-uniformity while maintaining structural integrity. The compensation increases the process yield, enabling production on large (>4") wafers 100.

The thin film 330 comprises one or more thin film layers. A single layer film is typically used. The choice of film materials allows for a selection of opto-mechanical features according to a specific field of use. In a particular embodiment, the thin film is comprised of a low stress silicon nitride. The low stress silicon nitride may have a residual tensile stress below 50 MPa. More particularly, *trisilicon tetranitride* (Si₃N₄) is used as the thin film material. In a particular embodiment, the thin film 330 has a thickness between 50 - 200 nm.

In a preferred embodiment, the one or more thin film layers may include a sidewall 350 coating. Before depositing the thin film 330 layer, the sidewalls 350 of the silicon ribs can be coated, providing sidewall 350 and thin film 330 reinforcement. The sidewall coating may comprise a multi-layer of thin films 330. The thin films 330 may comprise stacked silicon dioxide (SiO₂) and silicon nitride (Si₃N₄) layers or similar according to need. This multi-layer stack further enhances the thin film 330 durability and resistance to higher pressure gradients.

The freestanding membrane 400 shown in figure 4 comprises a plurality of membrane elements 300. The freestanding membrane 400 principally comprises a window support structure 310 and the plurality of membrane elements 300. The membrane elements 300 are realized together in a process where a membrane connection is made at the unsupported portion of the thin film 330. The membrane connection between the unsupported portions of the thin film 330 creates a uniform thin film for the freestanding membrane 400.

The freestanding membrane 400 shown in figure 4 is realized by a multistage etching process. The etching process is performed on a silicon wafer 100 which supports the subtractive processes utilized to create the freestanding membrane 400. The silicon wafer 100 is generally larger than 4 inches in diameter and around 300 micrometers thick, however different size and thickness wafers may be provided given adequate etching capabilities. The silicon wafer 100 preferably has a 6-inch diameter.

The method of fabrication to create the rounded cross-sectional profile 340 between the thin film 330 and the rib support structure 320 comprises a first etching stage on a first surface of a wafer. The first surface is intended to mean a top surface of the wafer. The first etching stage is a standard etching process to create the substantially vertical structures of the rib support structure 320. This standard etching process may be any adequate etching process. In a preferred embodiment of the invention, the etching process is a deep reactive ion etching process.

In a particular embodiment, the first etching stage creates hexagonal wells on the first surface. The hexagonal wells define a second surface at their base. To begin the first etching stage, a masking layer is deposited on the surface of the wafer 100. The deposition of the masking layer may use low-pressure chemical vapor deposition (LPCVD) and tetraethoxysilane (TEOS) as the precursor gas. The front-side of the wafer 100 can then be patterned with a photoresist mask. The active etching area comprises a circular window with hexagonal sub-structures patterned regularly over a circular sub-area as shown in Figure 1. A Deep Reactive Ion Etching tool is used to vertically etch the silicon wafer 100 using a pulsed or time-multiplexed etching process, also known as a Bosch process. Possible embodiments of such processes are disclosed, for example, in US Patent 5,501,893. The depth of the hexagonal well is typically between 40 and 90 micrometers, but preferably between 80 and 90 micrometers. The well defines the form of the plurality of rib support structures 320 by the removal of the surrounding wafer material. The well creation subtracts material from the wafer not protected by photoresist or similar masking material. The resulting hexagonal forms in an embodiment of the invention have a dimension generally between 170 and 200 micrometers. The rib support structure 320 has a width generally between 15 and 20 micrometers. The photoresist mask is then stripped from the first surface. The stripping may occur using an oxygen plasma process.

The method of fabrication comprises a second etching stage. The second etching stage comprises an isotropic etching stage on the second surface. The isotropic etching is carried out, for example, using a plasma such as SF₆ in a Deep Reactive Ion Etching process. During this step, only the source (ICP) power is applied to an inductive coil surrounding the process chamber, while the chuck power is not used. This configuration enables the generation of a high-density plasma that mainly chemically reacts with the exposed silicon surfaces instead of relying on ion bombardment. This allows the fluorine radicals to diffuse freely in all directions, leading to smooth and rounded profiles of the etched structures. As a result, an isotropic well is created from the second surface, the bottom of the previously etched hexagonal wells. The isotropic well forms the thin film transition structure 340. Since the plasma interacts with all exposed wafer surfaces during this step, it is crucial to protect regions that should not be etched, such as the top and sidewall 420 surfaces of the silicon ribs. To achieve this, a masking layer is needed. The masking layer may comprise a multilayer stack, for example SiO₂/Si₃N_{4/}SiO₂. This masking layer not only acts as a protective mask but also serves as reinforcement for the sidewalls, improving the pressure-resilience of the freestanding membranes. The masking layer may be deposited using an LPCVD method. The masking layer can then be selectively removed from the second surface of the structures using an anisotropic dry etching. The isotropic etching can then be carried out.

After the second etching process, another sidewall reinforcement may be deposited, further improving the membrane stiffness. The additional sidewall reinforcement may preferably be composed of low-stress Si₃N₄. The sidewall reinforcement may be on the order of 100 to 300 nm, but preferably 200 nm thick. The additional sidewall reinforcement layer is selectively etched from the bottom surface of the isotropic well using an anisotropic dry etching step.

After the second etching process is completed, a thin film deposition process may occur. The thin film deposition process deposits the thin film 330. The thin film 330, preferably a layer of low stress Si₃N₄ (stress < 50 MPa), is deposited. The thin film is deposited as a contiguous layer which coats the rib support structure, the first surface, and the second surface.

After a deposition of the thin film 330, a third etching process is necessary to release the membrane from the bulk silicon underneath the thin film 330. The third etching process comprises a back-side etch, occurring on the opposite, or third surface of the wafer. The back-side etch begins with a patterned photoresist mask. The patterned area comprises an open circular structure. The open circular structure preferably covers the majority of the second wafer surface. More specifically, the open circular structure may be between 6.5 and 7.5mm in dimension. After removing the masking layers from the open structures using a Reactive Ion Etching step, the photoresist is stripped via an oxygen plasma process. The exposed silicon surface within the circular patterns is then etched until the thin films are released. In a particular embodiment of the invention, the back-side etch may comprise a wet-etching process or similar bulk etching process. The bulk etching process anisotropically etches the bulk silicon in a TMAH bath for an extended period to fully release the thin films, creating the unsupported partitions. The period may be on the order of 5 hours.

A specific embodiment of this invention is reported below, which represents a preferred fabrication sequence.

### 1. Wafer front-side processing

1.1 Following the cleaning of the silicon wafer, SiO₂ (600 nm) is deposited on the surface of the wafer using low-pressure chemical vapor deposition (LPCVD) and tetraethoxysilane (TEOS) as the precursor gas.
1.2 The front-side of the wafer, the first face, is patterned with a photoresist mask and a mask aligner like Mask Aligner EVG 6200NT. The active area comprises a circular window (~6 mm in diameter) with hexagonal sub-structures (185 µm in diameter) patterned regularly over a circular area of ~45 mm² (as shown in Fig. 1).
1.3 The masking layer (SiO₂) is removed from the open hexagonal regions by a reactive ion etcher, optionally using an Oxford PlasmaPro 100 Cobra ICP reactive ion etcher (ICP RIE).
1.4 The silicon wafer may be vertically etched to a depth of ~80 µm using a DRIE tool and a pulsed Bosch process. The DRIE tool may be an Alcatel AMS200. Subsequently, the photoresist mask is stripped via an oxygen plasma process using a plasma asher. As an example, the plasma asher may be a PVA TEPLA 300 Plasma Asher.
1.5 A trilayer stack composed of SiO₂ (50 nm)/low-stress Si₃N₄ (50 nm)/SiO₂ (50 nm) is deposited using the LPCVD method. This stack protects the horizontal surfaces as well as the lateral sidewalls of the silicon ribs during the subsequent isotropic etching step, and also reinforces the sidewalls of the silicon ribs, enhancing their durability and pressure-resilience.
1.6 The trilayer (SiO₂/Si₃N_{4/}SiO₂) is selectively removed from the bottom of the structures using an anisotropic dry etching step performed by a reactive ion etcher. The reactive ion etcher may be an Oxford PlasmaPro 100 Cobra ICP RIE.
1.7 To create the isotropic well, an isotropic etching step is carried out using an SF₆ plasma in a DRIE tool to a depth of ~12 µm.
1.8 Subsequently, another sidewall reinforcement layer is deposited, composed of 200 nm-thick low-stress Si₃N₄ (stress < 276 MPa).
1.9 The previously deposited Si₃N₄ layer is selectively etched from the bottom of the structures using an anisotropic dry etching step performed by a reactive ion etcher such as an Oxford PlasmaPro 100 Cobra ICP RIE.
1.10 Finally, an ultra-low stress Si₃N₄ layer (stress < 50 MPa) is deposited using a LPCVD method.

### 2. Wafer back-side processing

2.1 The back-side of the wafer is patterned with a photoresist mask and a mask aligner such as a Mask Aligner EVG 6200NT. The patterned
area comprises of an open circular structure (7.6 mm in diameter). 2.2 The multi-layer mask comprising of a stack of SiO₂ and Si₃N₄ layers is etched from the open areas using a reactive ion etcher such as an Oxford PlasmaPro 100 Cobra ICP RIE.
2.3 The photoresist is then stripped via an oxygen plasma process using a plasma asher such as a PVA TEPLA 300 Plasma Asher.
2.4 Finally, the bulk silicon is anisotropically etched in a TMAH bath for ~5 hours to release the Si₃N₄thin films and render them freestanding, supported by the reinforced silicon ribs with a curved-bottom profile.

## Claims

1. A membrane element (300) for a freestanding membrane (400) comprising:
- a rib support structure (320);
- a thin film (330) having: a rib portion, wherein the thin film is covering said rib support structure; a transition portion, and an unsupported portion;
- a thin film transition structure (310) extending from a lower end of said rib support structure (320); and
wherein said thin film transition structure (310) is **characterized by** a rounded cross-sectional profile (340).

2. The membrane element (300) of claim 1, wherein the rounded cross-sectional profile (340) is defined by a recess, said recess forming a smooth transition between said rib portion and said unsupported partition of the thin film (330).

3. The membrane element (300) of claim 2, wherein said rounded cross-sectional profile (340) is substantially elliptical.

4. The membrane element (300) of claim 3, wherein the thin film transition structure (310) has a vertically etched depth substantially between 7 and 15 micrometers.

5. The membrane element (300) of claim 4, wherein the thin film transition structure (310) has a horizontally or laterally etched width between 2 and 6 micrometers.

6. The membrane element (300) of claim 5, further comprising:
- A thin film thickness substantially between 50 - 200 nm,
- A rib support structure width which is substantially between 15 and 20 micrometers.

7. The membrane element (300) of any of the preceding claims wherein the thin film (330) is composed of silicon nitride and wherein the rib support structure (320) and the thin film transition structure (310) are comprised of a silicon-based substrate.

8. A freestanding membrane (400) comprising a plurality of membrane elements (300) according to any of the preceding claims.

9. The freestanding membrane (400) according to claim 8, wherein the plurality of rib support structures (320) forms a substantially hexagonal arrangement.

10. The freestanding membrane (400) according to claim 9, wherein the hexagonal arrangement has a diameter substantially between 150 and 200 micrometers.

11. A method for producing a freestanding membrane structure (400) according to any one of claims 8-10 comprising:
- a first etching process on a first surface of a silicon wafer (100), wherein said first etching process forms: (i) a plurality of said rib support structures (320), and (ii) a second surface;
- a second etching process on said second surface to form said thin film transition structure (310) extending from said rib support structure (320);
- a thin film deposition process to deposit said thin film (330) covering a resulting surface of the first and second etching processes; and
- a third etching process on a third surface to release said thin film (330) from said silicon wafer (100) creating said unsupported portion.
